# EUROPÄISCHE PATENTSCHRIFT

(11) **EP 2 985 081 B1**
(45) Veröffentlichungstag und Bekanntmachung des Hinweises auf die Patenterteilung: **22.03.2017**
(21) Anmeldenummer: 14180695.0
(22) Anmeldetag: 12.08.2014
(51) Int. Cl.: B02C 15/00, B02C 15/04

(54) **Verfahren und Luftstrom-Vertikalmühle zur Mahlung von heißem und feuchtem Rohmaterial sowie kanalartiges Segment**
Method and air current vertical mill for milling of hot and wet raw materials and channel-form segment
Procédé et broyeur vertical pneumatique destiné à broyer du matériau brut chaud et humide et segment de type canal

(43) Veröffentlichungstag der Anmeldung: 17.02.2016
(73) Patentinhaber: Loesche GmbH, 40549 Düsseldorf (DE)
(72) Erfinder: Klokow, Alexander, 40549 Düsseldorf (DE)
(74) Vertreter: Heim, Florian Andreas

(56) Entgegenhaltungen:
- DE-A1-102005 040 519
- US-A- 4 597 537

## Beschreibung

Die Erfindung betrifft ein Verfahren zur Mahlung von heißem und feuchtem Rohmaterial, insbesondere von Zementklinker, nach Anspruch 1, sowie eine Luftstrom-Vertikalmühle nach Anspruch 7, insbesondere zur Durchführung des Verfahrens, und eine Vorrichtung zur Zuführung von Kühlgas sowie kanalartige Segmente dafür.

Luftstrom-Vertikalmühlen zur Mahlung von heißem und feuchtem Rohmaterial, zum Beispiel heißem Zementklinker oder Rohkohle, sind beispielsweise aus der EP 0 579 214 A1 oder der EP 1 675 683 A1 bekannt.
In der DE-AS 23 61 060 ist neben einer Mahltrocknung von Rohmehl in einer Luftstrom-Wälzmühle eine Kühlungsmahlung von Zementklinker in einer einem Drehrohrofen nachgeschalteten Luftstrom-Wälzmühle beschrieben.

Ein anderes Verfahren und eine Vorrichtung zur Vermahlung von heißem und feuchtem Zementklinker ist in der EP 1 922 149 B1 angeführt.
Es wird dort darauf hingewiesen, dass bei der Vermahlung von heißem Zementklinker in einem Temperaturbereich von etwa 120°C mit Schlacke und feuchten Zuschlagstoffen in Vertikalmühlen, sich die benötigten Kühl- und Trocknungsgase im Hinblick auf ihre Funktion als Transportgase negativ auswirken. Einerseits muss Heißgas mit einer ausreichend hohen Temperatur von etwa 180°C zugeführt werden, damit der Trocknungsprozess des Rohmaterials kurzfristig in der Phase der Vermahlung und des Transportes erfolgen kann.
Andererseits muss Kühlgas, insbesondere Frischluft, dem Heißgas beziehungsweise dem in der Vertikalmühle aufsteigenden Transportgas geregelt zugemischt werden, um nach dem Sichter die gewünschte definierte Abgabetemperatur für das Feingut zu erreichen.

Vielfach ist es dabei erforderlich, eine Wassereinspritzung in den Mahlraum durchzuführen, um die Temperatur des Rohmaterials beziehungsweise vermahlenen Materials, zu reduzieren.
Da im Falle einer Wassereinspritzung in den Mahlraum ein erhöhter Energiebedarf zur erforderlichen Verdampfung des Kühlwassers besteht, wird insgesamt die Effizienz des Mahltrocknungsprozesses in der Vertikalmühle verschlechtert, so dass summarisch gesehen auch eine Beeinträchtigung der Zementqualität zu erwarten ist.

Um diese Probleme einigermaßen zu beherrschen, wird in der EP 1 922 149 B1 vorgeschlagen, im oberen Vertikalmühlenteil oberhalb der Mahlwalzen regelbare Drallkästen vorzusehen, mittels denen Frischluft als Kühlgas weitgehend tangential in die Vertikalmühle und das nach oben aufsteigende Transportgas einzuleiten. Diese bekannten Drallkästen weisen auch Drallklappen auf, mit denen das Kühlgas geregelt und weitgehend tangential in die Vertikalmühle eingeströmt wird.

Trotzdem durch diese Maßnahmen Verbesserungen im Hinblick auf die vorausgehend angesprochenen Probleme erreichbar sind, insbesondere auch eine Vermeidung von einer Wassereinspritzung als Kühlmittel zur Reduzierung der Temperatur des Rohmaterials, haben sich diese Maßnahmen nicht vollständig bewährt. Insbesondere wurde festgestellt, dass das von unten in die Vertikalmühle geleitete heiße Transportgas, welches mit einer Drallströmung das Luftstrom-Mahlpartikel-Gemisch nach oben führt, durch die über die Drallkästen einströmende Kühlluft strähnenmäßig beeinflusst wird. Dies bedeutet, dass Strähnen und unterschiedliche Temperaturbereiche im aufsteigenden Luftstrom-Mahlpartikel-Gemisch vorliegen, so dass auch der im oberen Bereich der Vertikalmühle vorgesehene Sichtungsprozess beeinträchtigt wird. Dies beeinflusst sowohl das klassierte Feingut, da im Austrittsbereich aus der Vertikalmühle unterschiedliche Temperaturbereiche im Feingut vorliegen. Andererseits kann diese Maßnahme einer weitgehend punktuellen Einströmung von Kühlluft über die Drallkästen und die Strähnenbildung im aufsteigenden Luftstrom-Mahlpartikel-Gemisch auch zu einem unruhigen Lauf der Vertikalmühle führen, was die Produktqualität des Feingutes beeinträchtigen aber auch einen höheren Energieverbrauch bewirken kann.

In der US 4 597 537 A ist eine Luftstrom-Vertikalmühle beschrieben, bei der zur Einströmung von Heißluft oder Kühlluft um den Mahlteller herum ein Ringspalt vorgesehen ist. Zur Verbesserung der Fluidströmung und deren Geschwindigkeit kann einerseits im Bereich des Sichters eine Vorrichtung zur Zuführung von Kühlgas vorgesehen sein, wobei das Kühlgas tangential in das den Sichter umgebende Gehäuse eingeleitet wird. Andererseits kann auch unterhalb des Sichters eine weitere Zuleitung von Gas in den Rückführkonus für Grobgut berücksichtigt werden, um die Durchflussrate zur Verbesserung der Klassierung der gemahlenen Partikel regulieren zu können.

Der Erfindung liegt daher die **Aufgabe** zugrunde, ein Verfahren zur Mahlung von heißem und feuchtem Rohmaterial, speziell von heißem Zementklinker, und eine dafür geeignete Luftstrom-Vertikalmühle effizienter zu konzipieren und die vorausgehend genannten Nachteile zu vermeiden, so dass eine gesicherte Produktqualität erreicht wird, und die entsprechenden Maßnahmen auch einen nachträglichen Einbau in bestehende Vertikalmühlen zulassen.

Diese Aufgabe wird verfahrensmäßig durch die Merkmale des Anspruchs 1 und vorrichtungsmäßig durch die Merkmale einer Luftstrom-Vertikalmühle gemäß Anspruch 7 gelöst, wobei eine Vorrichtung zur Zuführung von Kühlgas nach Anspruch 15 vorgeschlagen wird, welche kanalartige Segmente nach Anspruch 12 aufweist.

Ein wesentlicher Kerngedanke der Erfindung kann darin gesehen werden, ein über den gesamten Innenumfang einer Luftstrom-Vertikalmühle verteiltes Einströmen von Kühlgas, insbesondere Kühlluft, durchzuführen, so dass eine weitestgehend gleichmäßige Temperaturreduzierung im aufsteigenden Volumenquerschnitt des Luftstrom-Mahlpartikel-Gemisches erreicht wird. Hierzu wird die Kühlluft ringförmig über den gesamten Innenumfang des Gehäuses einer Luftstrom-Vertikalmühle eingedüst, was bevorzugt radial und insbesondere etwa horizontal im Gehäuse der Luftstrom-Vertikalmühle erfolgt.
Die Einströmung der Kühlluft kann auch mit einer tangential und gegebenenfalls leicht aufsteigenden Komponente erfolgen, so dass gleichzeitig mit der Abkühlung des Luftstrom-Mahlpartikel-Gemisches eine Drallverstärkung für das aufsteigende Gemisch erreicht wird.
Insbesondere die radiale Einströmung der Kühlluft bewirkt eine intensive, schnelle Vermischung mit dem aufsteigenden, heißen Luftstrom-Mahlpartikel-Gemisch, so dass auch eine rasche gleichmäßige Abkühlung des Luftstrom-Mahlpartikel-Gemisches erreicht wird.

Um bei der ringförmigen Einleitung des Kühlgases weitgehend gleiche Druck- und Strömungsverhältnisse zu erreichen, wird das über den gesamten Umfang des Gehäuses der Luftstrom-Vertikalmühle eingeleitete Kühlgas über mehrere Segmentabschnitte zugeführt. Die einzelnen Segmentabschnitte werden im Bereich ihrer Eintrittsöffnungen mit Kühlgas mit gleichem Druck und Strömungsvolumen beaufschlagt, so dass hierdurch die relativ hohe Temperatur des aufströmenden Luftstrom-Mahlpartikel-Gemisches im Wesentlichen gleichförmig und einheitlich abgekühlt werden kann.

Es hat sich gezeigt, dass die Anzahl der Segmentabschnitte etwa im Bereich von drei bis sechs Segmenten ausreichend ist, um eine Vergleichmäßigung der Temperaturreduzierung zu erreichen. Es können aber auch mehr Segmente angeordnet werden.

Grundsätzlich ist auch ein ringförmiges Einströmen von Kühlgas mit nur einem einzigen oder auch zwei Halbringen denkbar. Es ist dann jedoch darauf zu achten, dass die Ausströmungsverhältnisse des Kühlgases in das aufsteigende Luftstrom-Mahlpartikel-Gemisch gleichgehalten werden müssen, was über die Druckbeaufschlagung des Kühlgases beim Eintritt in den Ring beziehungsweise Halbring und über die Fläche der Ausströmöffnungen am Ring oder Halbring erreicht werden kann.

Als Kühlgas wird bevorzugterweise Frischluft oder Umgebungsluft oder auch gekühlte Luft oder Prozessgas eingesetzt.

Heißer Zementklinker, der gegebenenfalls mit Schlacke und Zuschlagsstoffen im Rahmen einer Zementherstellung als Rohmaterial der Luftstrom-Vertikalmühle zugeführt und nachfolgend gemahlen und getrocknet wird und dabei eine Temperatur im Bereich von etwa 90°C bis 120°C hat, kann mit den angesprochenen Maßnahmen auf eine definierte und für die Weiterverarbeitung geeignete Temperatur von insbesondere etwa 70°C gleichmäßig abgekühlt werden.

Zur einheitlichen Abkühlung des aufsteigenden Luftstrom-Mahlpartikel-Gemisches wird das Kühlgas kanalförmig in die vorgesehenen Segmentabschnitte bzw. Segmente eingeleitet und über eine Mehrzahl von Austrittsöffnungen mit jeweils etwa einem gleichen Ausströmvolumen in die Luftstrom-Vertikalmühle eingeleitet.
Hierbei kann die gewünschte, definierte Austrittstemperatur des Feingutes nach dem Sichter mittels der Temperatur und des eingeleiteten Volumens des Kühlgases optimal geregelt werden.

Zur Durchführung des Verfahrens eignet sich insbesondere eine Luftstrom-Vertikalmühle. Diese weist in herkömmlicher Weise einen rotierenden Mahlteller auf, auf dem das zu mahlende Rohmaterial, im Beispiel heißer Zementklinker, in einem Mahlbett geführt wird, auf dem darauf abrollende Mahlwalzen vorgesehen sind. Eine derartige Luftstrom-Vertikalmühle weist im Bereich des Mahltellers einen umlaufenden Ringspalt auf, in dem ein Schaufelring für nach oben strömendes Heiß- und Transportgas angeordnet ist. Im oberen Bereich einer derartigen Luftstrom-Vertikalmühle ist bevorzugterweise ein dynamischer Sichter vorgesehen, der das aufsteigende Luftstrom-Mahlpartikel-Gemisch in Feingut und Grobgut klassiert, wobei Letzteres rezirkuliert über einen Rückführkonus etwa mittig auf den Mahlteller zurückgeleitet wird.

Oberhalb der Mahlwalzen ist eine Vorrichtung zur Zuführung von Kühlgas für die Absenkung der Temperatur des nach oben geführten Feingutes und Grobgutes vorhanden.
Diese Vorrichtung zur Zuführung von Kühlgas ist im oberen Bereich der Luftstrom-Vertikalmühle ringförmig und umlaufend am beziehungsweise im Gehäuse vorgesehen. Dies wird geeigneterweise mittels mehrerer kanalartiger Segmente realisiert, um eine gleichmäßige, bevorzugt radiale Einleitung von Kühlgas zu erreichen, wobei die kanalartigen Segmente gleich beabstandet über den Umfang des Gehäuses vorhanden sind.

Diese kanalartigen Segmente können zum Beispiel miteinander anstoßend als Ringsegmente mit einem Bogenbereich von etwa 60° ausgelegt sein. Zweckmäßigerweise bilden dann sechs derartige kanalartige Segmente die entsprechende Vorrichtung zur Abgabe der Kühlluft.
Kleinere Ringsegmente haben den Vorteil einer besseren Vergleichmäßigung der in den Innenraum der Vertikalmühle eingeblasenen Kühlluft.

Es hat sich aber auch gezeigt, dass eine weitgehend gleichmäßige und gute Temperaturabkühlung des aufsteigenden Luftstrom-Mahlpartikel-Gemisches mit zum Beispiel drei kanalartigen Segmenten, die über kurze Zwischensegmente verbunden sind und nicht direkt aneinander stoßend, erreicht werden kann. Dies wird weitgehend durch die Ausrichtung von in den kanalartigen Segmenten vorgesehenen Lamellen bestimmt, welche bevorzugt eine radiale Ausströmrichtung der Kühlluft vorgibt.

Die mehreren kanalartigen Segmente zur Bildung der Vorrichtung für die Zuführung von Kühlluft werden gleich beabstandet beziehungsweise mit gleicher Erstreckung über den Umfang des Gehäuses der Vertikalmühle angeordnet.

Die Vorrichtung zur Zuführung von Kühlluft kann aufgrund ihrer Konstruktion auch nachträglich relativ einfach in bestehende Anlagen und Vertikalmühlen eingebaut werden. In der Höhe der Anordnung der Vorrichtung in Relation zum Gehäuse bedarf es im Wesentlichen eines umlaufenden Spaltes im Gehäuse, in das die ringförmige Vorrichtung mit ihren kanalartigen Segmenten und speziell deren Innenbereiche mit den Austrittsöffnungen eingebaut beziehungsweise insbesondere verschweißt werden kann.

Die kanalartigen Segmente der Vorrichtung zur Zuführung von Kühlluft haben jeweils eine Eintrittsöffnung für zugeführte Kühlluft und vorzugsweise eine Vielzahl von nach innen gerichteten, insbesondere radial nach innen gerichteten, seitlichen Austrittsöffnungen. Die Fläche der jeweiligen Eintrittsöffnung eines kanalartigen Segments entspricht dabei zweckmäßigerweise etwa der Summe der Flächen der Austrittsöffnungen des Segments oder ist geringfügig etwas größer, insbesondere etwa 5 bis 10% größer, ausgelegt.
Die Eintrittsöffnung des jeweiligen kanalartigen Segments ist dabei mit einer Zuleitung für die Kühlluft verbunden. Geeigneterweise wird hierfür jeweils ein separater Ventilator vorgesehen, welcher Umgebungsluft oder Frischluft ansaugt und in das kanalartige Segment abgibt.
Sofern die Luftstrom-Vertikalmühle im Unterdruck betrieben wird, zum Beispiel mittels eines der Sichtung nachgeschalteten Ventilators, bedarf es keiner einzelnen Ventilatoren für die kanalartigen Segmente, sondern der im Inneren der Mühle erzeugte Unterdruck ist ausreichend für die erforderliche Kühllufteinströmung.

Die benachbarten kanalartigen Segmente können zweckmäßigerweise aneinander grenzend und miteinander verbunden sein oder zueinander etwas beabstandet, wobei dann ein Verbindungssegment kreisringförmig zwischen benachbarten Segmenten vorgesehen ist.
Die mittels der kanalartigen Segmente gebildete Vorrichtung zur Zuführung von Kühlgas kann zum Beispiel etwa drei direkt einander angrenzende oder etwas voneinander beabstandete kanalartige Segmente aufweisen, die über einen Bogenbereich von 60° bis 100° oder 120 ° reichen, wobei mittels entsprechender Verbindungssegmente üblicherweise eine geschlossene kreisringförmige Anordnung geschaffen wird.
Die Vorrichtung zur Zuführung von Kühlgas insgesamt ist dem Einbauquerschnitt für die Vorrichtung in Höhe der Einbaustelle im Gehäuse der Vertikalmühle angepasst.

Zur Verbesserung der Regelbarkeit des zugeführten Kühlgases oder der Kühlluft weisen die Eintrittsöffnungen der kanalartigen Segmente steuerbare Jalousieklappen auf. Hierdurch kann ganz gezielt das in den Innenraum eingeführte Strömungsvolumen der Kühlluft geregelt werden.

Bevorzugt werden etwa sechs kanalartige Segmente mit ringförmiger Anordnung verwendet, wobei diese Segmente etwa über 60° reichen und direkt aneinander anschließen.

Das direkte Aneinanderschließen wird dadurch ermöglicht, dass der Innenradius der kanalartigen Segmente im Bereich der Austrittsöffnungen etwas kleiner ist als der Außenradius des Bogensegments eines kanalartigen Segments. Hierdurch lässt sich einerseits der direkte Übergang und das Anliegen der Bereiche mit den Austrittsöffnungen realisieren, während die Zuleitung für die Eintrittsöffnungen der kanalartigen Segmente aufgrund des etwas größeren Außenradius geringfügig von der Kreisringform beabstandet ist.

Die kanalartigen Segmente, welche als Teil der Vorrichtung zur Zuführung von Kühlgas ausgelegt sind, sind vorteilhafterweise in etwa als auslaufende Keilform von der Eintrittsöffnung für das Kühlgas zum geschlossenen Ende des Segmentes ausgebildet, wobei ein ringförmiges inneres Kreissegment die Austrittsöffnungen für das Kühlgas aufweist.

Die Austrittsöffnungen der kanalartigen Segmente haben bevorzugt gleichen Öffnungsquerschnitt, was eine Vergleichmäßigung der Einströmung der Kühlluft ermöglicht..

Zur Vereinfachung und besseren Regulierung kann die Eintrittsöffnung der kanalartigen Segmente etwa rechteckig und insbesondere quadratisch ausgelegt und mit steuerbaren Jalousieklappen versehen sein, um über den Öffnungsquerschnitt die zugeführte Kühlluftströmung zu steuern.
Die kanalartigen Segmente können auch einen kreisförmigen oder anderen Querschnitt aufweisen, was eine vereinfachte Herstellung erlaubt.

Die Vorrichtung zur Zuführung von Kühlgas, welche auch im Sinne eines Nachrüstsatzes in eine Vertikalmühle eingebaut werden kann, weist daher mehrere, insbesondere drei oder sechs kanalartige Segmente auf, die zu einer starren Ringform miteinander verbunden sind.

Die Erfindung wird nachfolgend anhand schematischer Figuren und zweier Ausführungsbeispiele noch näher erläutert. Es zeigen:
- Fig. 1: einen Vertikalschnitt durch eine Luftstrom-Vertikalmühle, wobei die bekannten Baugruppen mit unterbrochenen Linienzügen dargestellt sind und die Vorrichtung zur Zuführung von Kühlgas im oberen Bereich der Vertikalmühle mit ausgezogenen Linien schematisch eingezeichnet ist;
- Fig. 2: eine vereinfachte perspektivische Ansicht auf eine Vorrichtung zur Zuführung von Kühlgas mit sechs aneinander grenzenden kanalartigen Segmenten;
- Fig. 3: eine perspektivische Ansicht eines einzelnen kanalartigen Segmentes mit Blick auf die Austrittsöffnungen an der Innenkontur der ringförmigen Anordnung;
- Fig. 4: eine perspektivische Darstellung einer Vorrichtung zur Zuführung von Kühlgas mit drei kanalartigen Segmenten und Blick auf eine Eintrittsöffnung eines Segmentes; und
- Fig. 5: eine Draufsicht auf die Vorrichtung nach Fig. 4

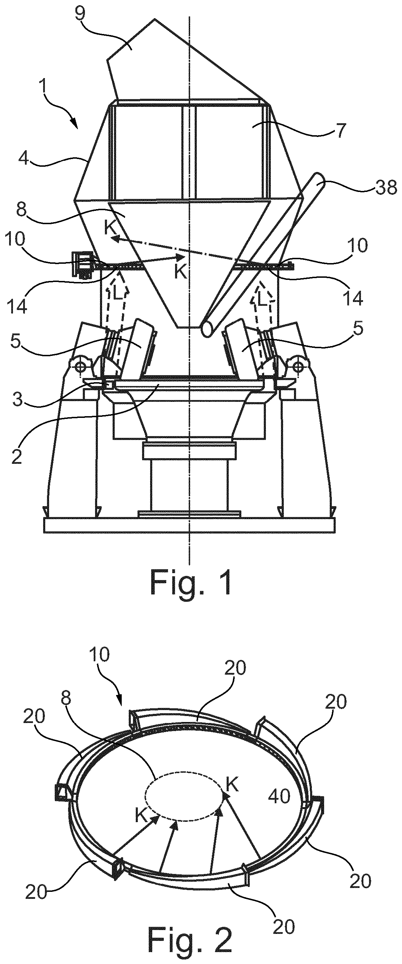

In Fig. 1 ist eine Luftstrom-Vertikalmühle 1 im Vertikalschnitt mit ihren wesentlichen Baugruppen dargestellt. Im unteren Bereich der Luftstrom-Vertikalmühle 1 ist ein rotativ antreibbarer Mahlteller 2 angeordnet, der von einem Ringspalt umgeben ist, in dem ein Schaufelring 3 angeordnet ist. Durch diesen Schaufelring 3 hindurch wird durch eine Schrägausrichtung die wesentliche Luft- und Heißgasströmung für den Transport und die Trocknung eines nach oben geführten Luftstrom-Mahlpartikel-Gemisches L eingebracht. Auf dem Mahlteller 2 wird eine Mahlbahn aus heißem und feuchtem Rohmaterial gebildet, auf dem im Beispiel zwei Mahlwalzen 5 dargestellt sind und darauf reibschlüssig abrollen. Es können auch mehr Mahlwalzen, z. B. vier oder sechs angeordnet sein.

Die Luftstrom-Vertikalmühle 1 ist von einem Gehäuse 4 ummantelt, wobei im oberen Bereich ein dynamischer Sichter 7 eingebaut ist, an den sich nach unten ein Rückführkonus 8 für aus dem Sichter 7 abgewiesenes Grobgut angeordnet ist.

Die Aufgabe des Rohmaterials erfolgt über eine rohrartige Zuführeinrichtung 38 etwa in die Mitte des Mahltellers 2.

Das mittels der Walzen 5, vermahlene Rohmaterial wird als Luftstrom-Mahlpartikel-Gemisch L üblicherweise in einer drallförmigen Strömung nach aufwärts in den oberen Teil der Luftstrom-Vertikalmühle 1 geführt.
Um bei übermahlenem, heißem Zementklinker im Temperaturbereich von etwa 100°C eine Temperatursenkung auf etwa 70°C zu erreichen, ist im oberen Bereich der Luftstrom-Vertikalmühle 1 eine im Wesentlichen horizontal angeordnete ringförmige Vorrichtung 10 zur Zuführung von Kühlgas K vorgesehen. Mittels dieser Vorrichtung 10 kann die als Kühlgas K eingeblasene Kühlluft oder Umgebungsluft sehr gleichmäßig über den gesamten Innenumfang des Gehäuses 4 eingeströmt werden, wobei dies vorzugsweise radial mit etwa horizontaler Ausrichtung erfolgt.
Dies hat den Vorteil, eine bessere Vermischung und damit eine gezieltere, schnellere Abkühlung des aufsteigenden Luftstrom-Mahlpartikel-Gemisches L zu erreichen.

Dies ist durch die Pfeile mit K angedeutet. Hierbei soll die mit durchgezogener Linie dargestellte Strömung K im vorderen Bereich des Rückführkonus 8 verlaufen, während die rückseitige Kühlluftströmung mit K mit "Punkt-Linie" angedeutet ist.

Mittels der über die Vorrichtung 10 eingeblasenen Kühlluft ermöglicht die Erfindung eine weitgehend gleichmäßige Temperaturabsenkung des aufsteigenden Luftstrom-Mahlpartikel-Gemisches L zum Beispiel auf die bei gemahlenem Zementklinker gewünschte Temperatur im Bereich von 70°C. Diese Temperaturabsenkung mittels der ringförmigen Vorrichtung 10 erlaubt ein weitgehend strähnenfreies Luftstrom-Mahlpartikel-Gemisch L, das dem Sichter 7 zugeführt wird. Hierdurch ist es möglich, am Feingutauslass 9 ein gewünschtes, definiertes Feingut, insbesondere im Hinblick auf die Temperatur zu erreichen, das für die Weiterverarbeitung geeignet ist.

Obwohl in Fig. 1 nur zwei Mahlwalzen 5dargestellt sind, ist es dem Fachmann bekannt, auch mehrere Walzen vorzusehen.

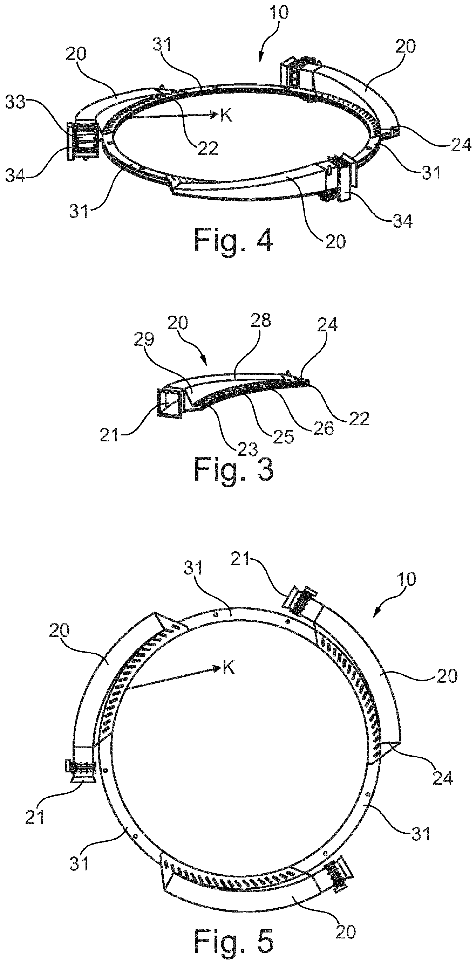

Da Fig. 1 nur die schematische Darstellung einer Vorrichtung 10 zur Zuführung von Kühlluft zeigt, ist in Fig. 2 in etwas perspektivischer Ansicht die ringförmige Ausbildung von sechs aneinander gereihten Kanalsegmenten 20 zu einem Ring 40 über 360° gezeigt. Die kanalartigen Ringsegmente 20 bilden dabei ein Bogensegment von etwa 60°. Bezüglich eines einzelnen kanalförmigen Segmentes 20 wird auf die Fig. 3 verwiesen, in der weitere Details dargestellt sind.
Das kanalförmige Segment 20 weist eine etwa quadratische Eintrittsöffnung 21 für die Kühlluft auf und geht zu dem im rechten Bereich vorgesehenen Segmentende in einen Kanalabschluss 24 mit einer auslaufenden Keilform 28 über, wobei sich die innere Querschnittsfläche stetig verkleinert, während die am inneren radialen Bereich vorgesehenen Austrittsöffnungen 22, 23 etwa gleiche Öffnungsflächen aufweisen.

Durch die am inneren Rand zwischen Ober- und Unterseite vorgesehenen Lamellen 26 kann die Strömungs- und Neigungsrichtung der ausströmenden Kühlluft eingestellt werden, wobei eine radial Strömungsrichtung bevorzugt wird.
Üblicherweise ist die Ausführung eines kanalartigen Segmentes 20 an die Gegebenheiten der entsprechenden Luftstrom-Vertikalmühle 1 angepasst und speziell dafür ausgelegt, so dass die Ausrichtung der Lamellen 26 festliegt und diese eingeschweißt sein können.
In anderen gewünschten Fällen können diese Lamellen 26 aber auch mit unterschiedlichem Anstellwinkel oder Neigungswinkel verstellbar konzipiert sein.
Der Übergang vom quadratischen Querschnitt des kanalförmigen Segmentes 20 in den inneren Randbereich erfolgt über eine schräg abfallende Seitenwand 29, so dass die Eintrittsöffnung 21 im Vergleich zum inneren Rand 25 leicht nach außen versetzt ist und dadurch bei einer Vorrichtung 10, wie sie in den Figuren 4, 5 gezeigt ist, auch eine separate Zuleitung für die Kühlluft zu jeder einzelnen Eintrittsöffnung 21 ermöglicht wird.

Gemäß Fig. 4 ist eine Vorrichtung 10 zur Zuführung von Kühlgas in perspektivischer Ansicht mit drei kanalartigen Segmenten 20 gezeigt. Diese kanalartigen Segmente 20 erstrecken sich etwa über einen Bereich von 80° bis 100° und sind mittels Verbindungssegmenten 31 miteinander zu einem starren Ring über 360° verbunden.
Im Beispiel nach Fig. 4 sind in der Eintrittsöffnung 21 Jalousieklappen 33 vorgesehen, die mittels einer Steuereinrichtung 34 die Regelung der Querschnittsfläche für die Eintrittsöffnung 21 ermöglichen. Andererseits ist erkennbar, dass die kanalartigen Segmente 20 eine auslaufende Keilform 28 zur Vergleichmäßigung der Druck- und Strömungsverhältnisse für die nach innen austretende Kaltluft K aufweisen.

In Fig. 5 ist das Beispiel der Vorrichtung 10 nach Fig. 4 zur Zuführung von Kühlgas in Draufsicht schematisch dargestellt. Gleiche Bezugszeichen betreffen in allen Figuren auch gleiche Baugruppen.
Die Figuren 4 und 5 zeigen daher, dass eine Vorrichtung 10 zur Zuführung von Kühlgas K auch mit drei kanalartigen Segmenten 20 realisiert werden kann, sofern volumen- und richtungsmäßig die über die Segmente und deren Austrittsöffnungen 22, 23 eingebrachte Kühlluft in das aufsteigende Luftstrom-Mahlpartikel-Gemisch L eingeströmt werden kann, um ein strähnenfreies Luftstrom-Mahlpartikel-Gemisch L dem Sichter 7 zuführen zu können.

Die erfindungsgemäße Vorrichtung 10 zur Zuführung von Kühlluft ist daher auch für einen nachträglichen Einbau in bereits bestehende Vertikalmühlen einsetzbar, wobei im Prinzip im oberen Teil des Mühlengehäuses 4 ein umlaufender Ringspalt 14 eingebracht wird, in den die Vorrichtung 10 mit ihren kanalartigen Segmenten 20 und insbesondere deren innere Ränder 25 eingesetzt und mit den Rändern des Gehäuses 4 starr verbunden werden muss.

In den Beispielen der Figuren ist die Einströmrichtung des Kühlgases K aus den Segmenten 20 in den freien Ringraum zwischen Gehäuse 4 und Rückführkonus 8 etwa radial und weitgehend horizontal vorgesehen. Unter Berücksichtigung empirischer Ergebnisse kann in bestimmten Anwendungsfällen auch eine etwa tangential zum Rückführkonus 8 gerichtete Einströmrichtung des Kühlgases K, gegebenenfalls auch mit einer geringen vertikalen Strömungskomponente, vorteilhaft sein.

Die ringförmige Vorrichtung 10 zur Zuführung von Kühlluft ermöglicht daher eine gezielte Temperaturreduzierung für ein definiertes Feingut, insbesondere Zementklinker-Feingut, gegebenenfalls mit Zuschlagstoffen und Schlacke, wobei der entsprechende Mahl- und Klassierungsprozess eine wesentliche Verbesserung der Produktqualität und eine Verbesserung der Gesamtenergiebilanz ermöglicht.

## Patentansprüche

1. Verfahren zur Mahlung von heißem und feuchtem Rohmaterial,
in einer Luftstrom-Vertikalmühle (1),
wobei das Rohmaterial der Luftstrom-Vertikalmühle (1) aufgegeben wird, darin vermahlen wird und zeitgleich mittels eines im unteren Teil der Luftstrom-Vertikalmühle zugeführten Heißgases getrocknet und einer Sichtung (7) in definiertes, ausgeleitetes Feingut und rezirkuliertes Grobgut im oberen Teil der Luftstrom-Vertikalmühle zugeführt wird,
wobei mittels eines im oberen Teil der Luftstrom-Vertikalmühle vor der Sichtung (7) eingeleiteten Kühlgases (K) eine Temperaturreduzierung des zur Sichtung (7) aufwärts geführten Luftstrom-Mahlpartikel-Gemisches (L) auf eine definierte Austrittstemperatur des Feingutes nach der Sichtung durchgeführt wird,
**dadurch gekennzeichnet,**
**dass** das Kühlgas (K) etwa ringförmig und mit im Wesentlichen radialer Einströmrichtung in die Luftstrom-Vertikalmühle (1) und das zur Sichtung (7) aufwärts geführte Luftstrom-Mahlpartikel-Gemisch (L) eingeleitet wird.

2. Verfahren nach Anspruch 1,
**dadurch gekennzeichnet,**
**dass** die ringförmige Einleitung des Kühlgases (K) über mehrere Segmentabschnitte (20), insbesondere drei bis sechs oder mehr Segmentabschnitte (20), durchgeführt wird, und
**dass** insbesondere die im Wesentlichen radiale Einströmrichtung des Kühlgases gegebenenfalls eine tangentiale und/oder leicht aufwärts gerichtete Strömungskomponente aufweist.

3. Verfahren nach einem der Ansprüche 1 oder 2,
**dadurch gekennzeichnet,**
**dass** als Kühlgas (K) Frischluft oder gekühlte Luft eingeleitet wird.

4. Verfahren nach einem der Ansprüche 1 bis 3,
**dadurch gekennzeichnet,**
**dass** gemahlener und weitgehend getrockneter Zementklinker von einer Temperatur im Bereich von 90°C bis 100°C mittels des Kühlgases (K) auf eine Temperatur des Feinguts des Zementklinkers im Bereich von 70°C abgekühlt wird.

5. Verfahren nach einem der Ansprüche 2 bis 4,
**dadurch gekennzeichnet,**
**dass** das Kühlgas (K) kanalförmig in die Segmentabschnitte (20) eingeleitet und über eine Mehrzahl von Austrittsöffnungen (22, 23) mit jeweils etwa gleichem Ausströmvolumen in die Luftstrom-Vertikalmühle (1) eingeleitet wird.

6. Verfahren nach einem der Ansprüche 1 bis 5,
**dadurch gekennzeichnet,**
**dass** die definierte Austrittstemperatur des Feingutes mittels der Temperatur und des eingeleiteten Volumens des Kühlgases (K) geregelt wird.

7. Luftstrom-Vertikalmühle,
mit einem rotierenden Mahlteller (2) mit zu Feingut und Grobgut zu mahlendem Rohmaterial, und darauf abrollenden Mahlwalzen (5),
mit einem den Mahlteller (2) umgebenden Ring (3) für nach oben strömendes Heiß- und Transportgas,
mit einem im oberen Bereich der Luftstrom-Vertikalmühle (1) vorgesehenen Sichter (7) und einem darunter angeordneten Rückführkonus (8) für rezirkuliertes Grobgut, und
mit einer oberhalb der Mahlwalzen (5) vorgesehenen Vorrichtung (10) zur Zuführung von Kühlgas (K) zur Absenkung der Temperatur des mit dem Heiß- und Transportgas nach oben geführten Feingutes und Grobgutes auf eine definierte Abgabetemperatur, wobei die Vorrichtung (10) zur Zuführung von Kühlgas (K) im oberen Bereich der Luftstrom-Vertikalmühle (1) umlaufend am oder im Gehäuse (4) ringförmig vorgesehen ist, zur Durchführung des Verfahrens nach einem der Ansprüche 1 bis 6,
**dadurch gekennzeichnet,**
**dass** der den Mahlteller (2) umgebende Ring als Schaufelring (3) ausgebildet ist, und
**dass** die Vorrichtung (10) zur Zuführung von Kühlgas (K) mehrere kanalartige Segmente (20) zur gleichmäßigen im Wesentlichen radialen Einleitung von Kühlgas (K) gleich beabstandet über den Umfang des Gehäuses (4) der Luftstrom-Vertikalmühle (1) aufweist.

8. Luftstrom-Vertikalmühle nach Anspruch 7,
**dadurch gekennzeichnet,**
**dass** die kanalartigen Segmente (20) jeweils eine Eintrittsöffnung (21) für zugeführtes Kühlgas (K) und eine Vielzahl von nach innen gerichteten seitlichen Austrittsöffnungen (22, 23) aufweisen,
wobei die Fläche der Eintrittsöffnung (21) eines Segments (20) etwa der Summe der Flächen der Austrittsöffnungen (22, 23) dieses Segmentes (20) entspricht oder geringfügig größer ausgelegt ist.

9. Luftstrom-Vertikalmühle nach Anspruch 7 oder 8,
**dadurch gekennzeichnet,**
**dass** benachbarte kanalartige Segmente (20) angrenzend miteinander verbunden sind oder beabstandet über jeweils ein Verbindungssegment (31) kreisringförmig angeordnet sind.

10. Luftstrom-Vertikalmühle nach einem der Ansprüche 7 bis 9,
**dadurch gekennzeichnet,**
**dass** die Eintrittsöffnungen (21) der kanalartigen Segmente (20) steuerbare Jalousieklappen (33) zur Regelung der Strömung des Kühlgases (K) aufweisen.

11. Luftstrom-Vertikalmühle nach einem der Ansprüche 7 bis 10,
**dadurch gekennzeichnet,**
**dass** das Kühlgas (K) Frischluft, gekühlte Luft oder kühle Prozessluft ist.

12. Kanalartiges Segment (20) als Teil einer Vorrichtung (10) zur Zuführung von Kühlgas (K) in eine Luftstrom-Vertikalmühle (1) nach einem der Ansprüche 7 bis 11,
**dadurch gekennzeichnet,**
**dass** das Segment (20) von der Eintrittsöffnung (21) für das Kühlgas (K) zum geschlossenen Ende (24) des Segmentes (20) hin eine verjüngende Form, bevorzugt eine etwa auslaufende Keilform (28), mit teilringförmigem inneren Bogensegment aufweist, und
**dass** im teilringförmigen inneren Bogensegment die Austrittsöffnungen (22, 23) für das Kühlgas (K) vorgesehen sind.

13. Kanalartiges Segment nach Anspruch 12,
**dadurch gekennzeichnet,**
**dass** die Austrittsöffnungen (22, 23) eine etwa gleiche Öffnungsfläche aufweisen.

14. Kanalartiges Segment nach Anspruch 12 oder 13,
**dadurch gekennzeichnet,**
**dass** die Eintrittsöffnung (21) etwa rechteckig, insbesondere quadratisch oder kreisförmig, ausgelegt ist, und
**dass** mittels steuerbarer Jalousienklappen (33) der Öffnungsquerschnitt veränderbar ist.

15. Vorrichtung (10) zur Zuführung von Kühlgas (K),
mit mehreren zusammengebauten kanalartigen Segmenten (20) nach einem der Ansprüche 12 bis 14.

## Claims

1. Method for grinding hot, wet raw material,
in an air-swept vertical mill (1),
wherein the raw material is fed to the air-swept vertical mill (1), ground therein and at the same time dried by means of a hot gas supplied in the lower part of the air-swept vertical mill, and fed to a classifying (7) into defined, channelled out fines and recirculated grit in the upper part of the air-swept vertical mill, wherein by means of a cooling gas (K) introduced in the upper part of the air-swept vertical mill before the classifying (7) a temperature reduction of the air flow - grinding particle mixture (L) fed upwards to the classifying (7) to a defined outlet temperature of the fine material after the classifying is carried out, **characterised in that**
the cooling gas (K) is introduced approximately annularly and with substantially radial inflow direction into the air-swept vertical mill (1) and the air flow - grinding particle mixture (L) guided upwards to the classifying (7).

2. Method according to claim 1,
**characterised in that**
the ring-shaped introduction of the cooling gas (K) is carried out over a plurality of segment sections (20), in particular three to six or more segment sections (20), and
in particular the substantially radial inflow direction of the cooling gas optionally has a tangential and / or slightly upwardly orientated flow component.

3. Method according to one of claims 1 or 2,
**characterised in that**
fresh air or cooled air is introduced as cooling gas (K).

4. Method according to one of claims 1 to 3,
**characterised in that**
ground and extensively dried cement clinker is cooled from a temperature in the range of from 90°C to 100°C by means of the cooling gas (K) to a temperature of the fines of the cement clinker in the range of 70°C.

5. Method according to one of claims 2 to 4,
**characterised in that**
the cooling gas (K) is introduced in channel-shape into the segment sections (20) and introduced via a plurality of outlet openings (22, 23) each having approximately the same outflow volume into the air-swept vertical mill (1).

6. Method according to one of claims 1 to 5,
**characterised in that**
the defined outlet temperature of the fines is regulated by means of the temperature and the introduced volume of the cooling gas (K).

7. Air-swept vertical mill,
having a rotating grinding table (2) with raw material to be ground to fines and grit, and grinding rollers (5) grinding thereoff,
having a ring (3) surrounding the grinding table (2) for upwardly flowing hot and transport gas,
having a classifier (7) provided in the upper region of the air-swept vertical mill (1) and a return cone (8) arranged below for recirculated grit, and having a device (10), provided above the grinding rollers (5), for supplying cooling gas (K) to reduce the temperature of the fines and grit guided upwards with the hot and transport gas to a defined discharge temperature, wherein the device (10) for supplying cooling gas (K) is provided in a ring-shaped manner in the upper region of the air-swept vertical mill (1) circumferentially on or in the housing (4), to carry out the method according to one of claims 1 to 6,
**characterised in that**
the ring surrounding the grinding table (2) is designed as a blade ring (3), and the device (10) for supplying cooling gas (K) has a plurality of channel-like segments (20) for even, substantially radial introduction of cooling gas (K), which are equally spaced apart around the circumference of the housing (4) of the air-swept vertical mill (1).

8. Air-swept vertical mill according to claim 7,
**characterised in that**
the channel-like segments (20) each have an inlet opening (21) for supplied cooling gas (K) and a plurality of inwardly orientated side outlet openings (22, 23),
wherein the area of the inlet opening (21) of a segment (20) corresponds approximately to the sum of the areas of the outlet openings (22, 23) of this segment (20) or is designed to be slightly larger.

9. Air-swept vertical mill according to claim 7 or 8,
**characterised in that**
neighboring channel-like segments (20) are interconnected adjacent to each other or spaced apart in a circular ring shape via a respective connecting segment (31).

10. Air-swept vertical mill according to one of claims 7 to 9,
**characterised in that**
the inlet openings (21) of the channel-like segments (20) have controllable shutter flaps (33) to regulate the flow of the cooling gas (K).

11. Air-swept vertical mill according to one of claims 7 to 10,
**characterised in that**
the cooling gas (K) is fresh air, cooled air or cool process air.

12. Channel-like segment (20) as part of a device (10) for supplying cooling gas (K) into an air-swept vertical mill (1) according to one of claims 7 to 11,
**characterised in that**
the segment (20) has a tapering form from the inlet opening (21) for the cooling gas (K) towards the closed end (24) of the segment (20), preferably a tipped wedge form (28), with a part ring shaped inner arc segment, and
the outlet openings (22, 23) for the cooling gas (K) are provided in the part ring shaped inner arc segment.

13. Channel-like segment according to claim 12,
**characterised in that**
the outlet openings (22, 23) have an approximately equal opening area.

14. Channel-like segment according to claim 12 or 13,
**characterised in that**
the inlet opening (21) is designed to be approximately rectangular, in particular square or circular, and
the opening cross-section can be changed by means of controllable shutter flaps (33).

15. Device (10) for supplying cooling gas (K),
having a plurality of channel-like segments (20) built together according to one of claims 12 to 14.

## Revendications

1. Procédé pour le broyage d'une matière première chaude et humide,
dans un broyeur vertical à flux d'air (1),
tandis que la matière première est introduite dans le broyeur vertical à flux d'air (1), est broyée dans celui-ci et, dans le même temps, séchée au moyen d'un gaz chaud introduit dans la partie inférieure du broyeur vertical à flux d'air et est soumise à un tri (7) entre particules fines définies et détournées et produit grossier remis en circulation dans la partie supérieure du broyeur vertical à flux d'air,
tandis qu'au moyen d'un gaz de refroidissement (K) introduit avant le tri (7) dans la partie supérieure du broyeur vertical à flux d'air, est effectuée une réduction de la température du mélange flux d'air - particules broyées (L) conduit vers le haut à le tri (7) jusqu'à une température de sortie définie des particules fines après le tri,
**caractérisé en ce que**
le gaz de refroidissement (K) est introduit de manière approximativement annulaire et avec une direction d'afflux essentiellement radiale dans le broyeur vertical à flux d'air (1) et le mélange flux d'air - particules de broyées (L) conduit vers le haut à le tri (7).

2. Procédé selon la revendication 1,
**caractérisé en ce que**
l'introduction annulaire du gaz de refroidissement (K) par le biais de plusieurs tronçons de segments (20), en particulier trois à six tronçons de segments (20) ou plus, est effectuée, et
en particulier, la direction d'afflux essentiellement radiale du gaz de refroidissement présente, le cas échéant, un composant de flux dirigé de manière tangentielle et/ou faiblement vers le haut.

3. Procédé selon les revendications 1ou 2,
**caractérisé en ce que**
de l'air frais ou de l'air refroidi est introduit en tant que gaz de refroidissement (K).

4. Procédé selon une des revendications 1 à 3,
**caractérisé en ce que**
du clincker de ciment broyé et en grande partie séché est refroidi pour passer d'une température comprise dans une fourchette allant de 90°C à 100°C au moyen d'un gaz de refroidissement (K) à une température des particules fines du clincker de ciment d'environ 70°C.

5. Procédé selon une des revendications 2 à 4,
**caractérisé en ce que**
le gaz de refroidissement (K) est introduit en forme de canal dans les tronçons de segments (20) et est introduit par le biais d'une pluralité d'ouvertures de sortie (22, 23), avec respectivement un volume de sortie à peu près équivalent, dans le broyeur vertical à flux d'air (1).

6. Procédé selon une des revendications 1 à 5,
**caractérisé en ce que**
la température de sortie définie des particules fines est réglée au moyen de la température et du volume introduit du gaz de refroidissement (K).

7. Broyeur vertical à flux d'air,
avec une assiette de broyage (2) rotative avec de la matière première à broyer pour obtenir des particules fines ou du produit grossier et des cylindres de broyage (5) déroulant dessus,
avec un anneau (3) entourant l'assiette de broyage (2) pour du gaz chaud et du gaz de transport affluant vers le haut,
avec un séparateur (7) prévu dans la partie supérieure du broyeur vertical à flux d'air (1) et un cône de renvoi (8), placé en dessous, pour du produit grossier remis en circulation, et
avec un dispositif (10) prévu au-dessus des cylindres de broyage (5) pour l'introduction de gaz de refroidissement (K) pour la réduction de la température des particules fines et du produit grossier conduits vers le haut avec le gaz chaud et de transport pour atteindre une température de sortie définie, tandis que le dispositif (10) pour l'introduction de gaz de refroidissement (K) dans la partie supérieure du broyeur vertical à flux d'air (1) est prévu de manière annulaire sur le pourtour du boîtier (4), à ou à l'intérieur de celui-ci, pour l'exécution de la procédure selon une des revendications 1 à 6, **caractérisé en ce que**
l'anneau entourant l'assiette de broyage (2) est formé en tant qu'aube (3), et le dispositif (10) présente, pour l'introduction de gaz de refroidissement (K), plusieurs segments en forme de canal (20) pour l'introduction uniforme et essentiellement radiale de gaz de refroidissement (K), disposés de manière équidistante sur le pourtour du boîtier (4) du broyeur vertical à flux d'air (1).

8. Broyeur vertical à flux d'air selon la revendication 7,
**caractérisé en ce que**
les segments en forme de canal (20) présentent respectivement une ouverture d'entrée (21) pour du gaz de refroidissement (K) introduit et un grand nombre d'ouvertures de sortie (22, 23) latérales dirigées vers l'intérieur, tandis que la surface de l'ouverture d'entrée (21) d'un segment (20) correspond approximativement à la somme des surfaces des ouvertures de sortie (22, 23) de ce segment (20) ou est conçue pour être légèrement plus grande.

9. Broyeur vertical à flux d'air selon les revendications 7 ou 8,
**caractérisé en ce que**
des segments en forme de canal (20) se trouvant les uns à côté des autres sont reliés les uns avec les autres de manière avoisinant ou que ces segments sont disposés, en forme d'anneau circulaire, de sorte que chaque segment soit espacé des autres par un segment de liaison (31).

10. Broyeur vertical à flux d'air selon une des revendications 7 à 9,
**caractérisé en ce que**
les ouvertures d'entrée (21) des segments en forme de canal (20) présentent des volets de dosage (33) commandables pour le réglage du flux du gaz de refroidissement (K).

11. Broyeur vertical à flux d'air selon une des revendications 7 à 10,
**caractérisé en ce que**
le gaz de refroidissement (K) est de l'air frais, de l'air refroidi ou de l'air du processus froid.

12. Segment en forme de canal (20) en tant que partie d'un dispositif (10) pour l'introduction de gaz de refroidissement (K) dans un broyeur vertical à flux d'air (1) selon une des revendications 7 à 11,
**caractérisé en ce que**
le segment (20), à partir de l'ouverture d'entrée (21) pour le gaz de refroidissement (K) jusqu'à l'extrémité fermée (24) du segment (20), présente une forme se rétrécissant, de préférence une forme de coin (28) s'affinant à peu près, avec un segment de courbe interne en forme d'anneau partiel, et
dans le segment de courbe interne en forme d'anneau partiel, les ouvertures de sortie (22, 23) sont prévues pour le gaz de refroidissement (K).

13. Segment en forme de canal selon la revendication 12,
**caractérisé en ce que**
les ouvertures de sortie (22, 23) présentent une surface d'ouverture à peu près équivalente.

14. Segment en forme de canal selon les revendications 12 ou 13,
**caractérisé en ce que**
l'ouverture d'entrée (21) est conçue de forme approximativement rectangulaire, en particulier en forme de carré ou de cercle, et
par le biais de volets de dosage (33) commandables, la section d'ouverture est modifiable.

15. Dispositif (10) pour l'introduction de gaz de refroidissement (K),
avec plusieurs segments en forme de canal (20) assemblés, selon une des revendications 12 à 14.
